# EUROPÄISCHE PATENTANMELDUNG

(11) **EP 1 142 919 A1**
(43) Veröffentlichungstag der Anmeldung: **10.10.2001**
(21) Anmeldenummer: 01106889.7
(22) Anmeldetag: 20.03.2001
(51) Int. Cl.: C08G 18/67, C08G 18/81, C09D 175/16

(54) **Verfahren zur Herstellung von (Meth)Acryloylgruppen aufweisenden Oligo- und Polyurethanen als Bindemittel für Pulverlacke**

(30) Priorität: 31.03.2000 DE 10016193
(71) Anmelder: BAYER AG, 51368 Leverkusen (DE)
(72) Erfinder: Weikard, Jan, Dr., 51519 Odenthal (DE); Zwiener, Christian, Dr., 50672 Köln (DE); Fischer, Wolfgang, Dr., 40668 Meerbusch (DE); Thometzek, Peter, Dr., 51469 Bergisch Gladbach (DE)

(57) **Zusammenfassung**

Die Erfindung betrifft ein Verfahren zur Herstellung neuer pulverförmiger Bindemittel aus bestimmten (Meth)Acryloylgruppen aufweisenden Oligo- und Polyurethanen, die nach Applikation auf ein Substrat und Aufschmelzen durch Wärme mittels energiereicher Strahlung insbesondere UV-Strahlung gehärtet werden sowie die Verwendung der Bindemittel als Bestandteil von Pulverlacken.

## Beschreibung

Die Erfindung betrifft ein Verfahren zur Herstellung neuer pulverförmiger Bindemittel aus bestimmten (Meth)Acryloylgruppen aufweisenden Oligo- und Polyurethanen, die nach Applikation auf ein Substrat und Aufschmelzen durch Wärme mittels energiereicher Strahlung insbesondere UV-Strahlung gehärtet werden sowie die Verwendung der Bindemittel als Bestandteil von Pulverlacken.

Besonders hochwertige Beschichtungen aus pulverförmigen Bindemitteln werden bei Verwendung von Oligo- oder Polyurethanen erhalten. Solche Verbindungen werden z.B. in der EP-A 410 242 beschrieben. Sie werden durch Umsetzung von einer Polyisocyanatkomponente, bestehend aus mindestens einem organischen Polyisocyanat mit einer (Meth)Acryloylgruppen aufweisenden Alkoholkomponente, bestehend aus mindestens einem (Meth)Acryloylgruppen-aufweisenden, einwertigen Alkohol, und einer weiteren Aufbaukomponente, bestehend aus mindesten einer (Meth)Acryloylgruppen-freien Verbindung mit gegenüber Isocyanatgruppen reaktionsfähigen Gruppen hergestellt.

Die Herstellung dieser Verbindungen muß in einem organischen Lösungsmittel erfolgen, da eine lösungsmittelfreie Herstellung an den hohen Viskositäten der Verbindungen bei Temperaturen unter 120°C scheitert. Eine Erhöhung der Herstellungstemperatur über 100 bis 120°C birgt das dem Fachmann bekannte Risiko einer spontanen, ungewollten Polymerisation der (Meth)Acryloylgruppen aufweisenden Verbindungen. Der Nachteil der in der EP-A 410 242 beschriebenen Bindemittel besteht also darin, dass die Herstellung in einem Lösungsmittel erfolgt, welches am Ende der Herstellung unter hohem Aufwand wieder entfernt werden muß. Schon geringe Reste an Lösungsmittel beeinflussen das für die Applikation der Pulverlacke kritische Schmelzverhalten stark.

Zur Erniedrigung der Schmelzviskosität von Pulverlacken bestehend aus ungesättigten Polyestern oder acryloylfunktionellen Polyacrylaten werden diese Pulver nach der Lehre der EP-A 636 669 im Anschluß an die Herstellung mit einer niedermolekularen Vernetzersubstanz mit Vinylether-, Vinylester- oder (Meth)-acrylat-Funktionalität abgemischt. Die Vernetzersubstanz wird in der zitierten Anmeldung ebenfalls in Lösungsmittel hergestellt, welches im Anschluß entfernt werden muß. Weiterhin bergen Abmischungen von Vinylethern oder ―estern mit ungesättigten (Meth)acrylaten ein erheblich höheres Risiko einer ungewollten, spontanen Polymerisation (Copolymerisation elektronenreicher und -armer Doppelbindungen) als es beispielsweise bei reinen (Meth)acrylat-Systemen vorliegt.

A. Hult et al. beschreiben in Journal of Coatings Technology, Vol. 70, No. 884, Sept. 1998, 57 - 62 strahlungshärtbare Pulverlacke aus Mixturen von amorphen Methacrylat-funktionellem Polymer (Polyacrylat) und kristallinem (Meth)acrylat-Monomer. Auch hier ist es erforderlich, vorgenannte Polymere und Monomere getrennt und unter Verwendung von Lösungsmitteln herzustellen, welche nach der Herstellung unter hohem Aufwand wieder entfernt werden müssen.

Die der Erfindung zugrunde liegende Aufgabe bestand nun darin, ein Verfahren zur Herstellung von (Meth)Acryloylgruppen aufweisenden Oligo- und Polyurethanen als Bindemittel für Pulverlacke bereitzustellen, das die bekannten Nachteile der Herstellung in Lösungsmitteln nicht aufweist.

Es wurde gefunden, dass sich Urethanacrylate für Pulverlacke auch ohne Lösungsmittel herstellen lassen.

Gegenstand der Erfindung ist ein Verfahren zur Herstellung von (Meth)-Acryloylgruppen aufweisenden Oligo- und Polyurethanen als Bindemittel für Pulverlacke dadurch gekennzeichnet, dass eine Isocyanat-haltige Komponente mit einer Hydroxylgruppen-haltigen Komponente, die mindestens einen zusätzlich (Meth)-Acryloylgruppen aufweisenden Bestandteil enthält, in einer Schmelze von bestimmten (Meth)Acryloylgruppen aufweisenden Verbindungen so lange bei erhöhter Temperatur umgesetzt wird, bis der Gehalt an NCO unter 0,5 Gew.-% abgesunken ist, wobei die (Meth)Acryloylgruppen aufweisenden Verbindungen in festem Zustand kristallin sind, einen Schmelzpunkt von 30 bis 100°C und eine dynamische Viskosität bei 111°C von unter 10 Pa·s besitzen.

Die erfindungsgemäß hergestellten Urethanacrylate sind wertvolle Bestandteile der Pulverlacke. So hergestellte Pulverlacke ergeben nach Aufschmelzen und strahlungsinduzierter Härtung hochwertige Lackfilme, die nicht kristallin sind.

Gegenstand der Erfindung ist weiterhin die Verwendung der nach dem erfindungsgemäßen Verfahren hergestellten Bindemittel für Pulverlacke zur Beschichtung von Substraten aus Holz, Metall, Kunststoffen, mineralischen Stoffen oder bereits beschichteten Substraten oder von Substraten, die aus beliebigen Kombinationen der genannten Materialien bestehen.

Das erfindungsgemäße Verfahren wird zweistufig durchgeführt. Dabei werden in einer ersten Stufe die im festem Zustand kristallinen, (Meth)Acryloylgruppen aufweisenden Verbindungen des Schmelzpunkts 30 bis 110°C hergestellt. In der Schmelze dieser Verbindungen werden dann die z.B. aus der EP-A 410 242 bekannten Urethanacrylate ohne Verwendung von Lösungsmitteln bei Temperaturen unter 120°C hergestellt.

Zur Herstellung der im festem Zustand kristallinen, (Meth)Acryloylgruppen aufweisenden Verbindungen des Schmelzpunkts 30 bis 110°C können verschiedene Reaktionen angewandt werden. So ist es möglich Monohydroxyalkyl(meth)acrylate mit 2 bis 8 C-Atomen in der Alkylgruppe wie zum Beispiel 2-Hydroxyethyl(meth)acrylat, 2- oder 3-Hydroxypropyl(meth)acrylat oder 2-, 3- oder 4-Hydroxybutyl(meth)acrylat mit Mono-, Di- oder Triisocyanaten umzusetzen. Solche Isocyanate können sein: Cyclohexylisocyanat, Butylendiisocyanat, Hexamethylendiisocyanat (HDI), Isophorondisocyanat (IPDI), 3(4)-Isocyanatomethylmethylcyclohexyl-isocyanat (IMCI), Trimethylhexamethylendiisocyanat (=2,2,4 und/oder 2,4,4-Trimethylhexamethylendiisocyanat), die isomeren Bis(4,4'-isocyanatocyclohexyl)methane, Isocyanatomethyl-1,8-octandiisocyanat, 1,4-Cyclohexylendiisocyanat, Phenylisocyanat, Toloylisocyanat, 1,4-Phenylendiisocyanat, 2,4-und/oder 2,6-Toluylendiisocyanat (TDI), 1,5-Naphthylendiisocyanat, 2,4'- und/oder 4,4'-Diphenylmethandiisocyanat (MDI), Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben. Bevorzugt sind HDI, IPDI, TDI, MDI und die isomeren Bis(4,4'-isocyanatocyclohexyl)methane sowie deren Mischungen. Besonders bevorzugt ist HDI. Voraussetzung für die Eignung eines bestimmten Umsetzungsprodukts der vorgenannten Verbindungen ist sein Schmelzbereich, der für das erfindungsgemäße Verfahren zwischen 30 und 110 °C liegen muß. Bevorzugt werden Verbindungen, die einen scharfen Schmelzpunkt besitzen. Ferner muss die dynamische Viskosität der Verbindungen bei 111°C kleiner als 10 Pa·s, bevorzugt kleiner als 5 Pa·s, besonders bevorzugt kleiner als 1 Pa·s sein. Besonders bevorzugte Verbindungen sind die Umsetzungsprodukte von 1 mol HDI, TDI oder MDI mit je 2 mol 2-Hydroxyethylacrylat oder 2-Hydroxyethylmethacrylat.

Die Umsetzung von hydroxyfunktionellen Acrylaten mit Isocyanaten ist bekannt, z.B. aus P. K. T. Oldring (Ed.), Chemistry & Technology of UV & EB Formulations For Coatings, Inks & Paints, Vol. 2, 1991, SITA Technology, London, S. 73- 97. Es wird beispielsweise so vorgegangen, dass entweder das Isocyanat vorgelegt und unter Durchleiten eines sauerstoffhaltigen Gases, vorzugsweise von Luft, bei einer Temperatur oberhalb des Schmelzpunkts des herzustellenden Produkts im Temperaturbereich 30 bis 120°C mit dem hydroxyfunktionellen Acrylat umgesetzt wird, bis der NCO-Gehalt auf unter 0,5, bevorzugt unter 0,2 Gew.-% abgefallen ist. Es ist auch möglich, das hydroxyfunktionelle Acrylat vorzulegen und unter den genannten Bedingungen mit Isocyanat umzusetzen.

Diese zum (Poly)urethan führende Additionsreaktion kann in an sich bekannter Weise mittels geeigneter Katalysatoren, beispielsweise Zinnoctoat, Dibutylzinndilaurat oder tertiären Aminen wie Dimethylbenzylamin beschleunigt werden. Das als Umsetzungsprodukt erhaltene Urethanacrylat kann durch Zugabe geeigneter Inhibitoren und Antioxidantien wie beispielsweise Phenole und/oder Hydrochinone in Mengen von jeweils 0,001 bis 0,5 Gew.-% bezogen auf (Poly)urethan stabilisiert werden, damit so eine vorzeitige und unerwünschte Polymerisation verhindert werden kann. Der Zusatz dieser Hilfsmittel kann vor zu einem beliebigen Zeitpunkt gleichzeitig und/oder im Anschluß an die zum (Poly)urethan führende Umsetzung erfolgen.

Zur Herstellung der im festem Zustand kristallinen, (Meth)Acryloylgruppen aufweisenden Verbindungen des Schmelzpunkts 30 bis 110°C können neben der oben beschriebenen Isocyanat-Hydroxyl-Reaktion z.B. auch Epoxy-Säure-Reaktionen oder die Umsetzung von Hydroxyverbindungen mit Carbonsäuren und/oder Carbonsäureanhydriden durchgeführt werden. Beispiele hierfür sind die Umsetzung von (Meth)acryloylgruppen tragenden Epoxiden (z. B. Glycidylmethacrylat) mit aliphatischen und/oder aromatischen Dicarbonsäuren, die Umsetzung von (Meth)-acrylsäure mit monomeren mono- oder difunktionellen Epoxyverbindungen (z. B. Diglycidylether des Bisphenol A oder des Hexandiol) oder die Veresterung von Alkoholen (z.B. Bisphenol A, 1,4-Cyclohexandimethanol) mit (Meth)acrylsäure oder die Umsetzung von Carbonsäureanhydriden mit Hydroxyalkyl(meth)acrylaten. Wird die Veresterung durchgeführt, so wird durch Anlegen von Vakuum oder andere dem Fachmann bekannte Maßnahmen entstehendes Reaktionswasser aus der Reaktionsmischung entfernt werden.

Die Umsetzung von Epoxiden mit ungesättigten Carbonsäuren ist bekannt, z.B. aus P. K. T. Oldring (Ed.), Chemistry & Technology of UV & EB Formulations For Coatings, Inks & Paints, Vol. 2, 1991, SITA Technology, London, S. 37 - 57. Auch die Veresterung von Alkoholen mit (Meth)acrylsäure wird an gleicher Stelle S. 240 - 242 behandelt. In der Schmelze dieser im festem Zustand kristallinen, (Meth)-Acryloylgruppen aufweisenden Verbindungen des Schmelzpunkts 30 bis 110°C können dann z.B. die aus der EP-A 410 242 bekannten Urethanacrylate ohne Verwendung von Lösungsmitteln bei Temperaturen nicht über 120°C hergestellt.

Es handelt sich dabei um (Meth)-Acryloylgruppen aufweisende Polyurethane, die innerhalb des Temperaturbereichs von 40-200°C schmelzen, einen Gehalt an olefinischen Doppelbindungen in Form von (Meth)Acryloylgruppen (berechnet als =C=C=, Molekulargewicht = 24) von 2 bis 12 Gew.-% aufweisen und durch Umsetzung von
A) 40-80 Gew.-Teilen einer Polyisocyanatkomponente, bestehend aus mindestens einem organischen Polyisocyanat, mit
B) 15-50 Gew.-Teilen einer (Meth)Acryloylgruppen aufweisenden Alkoholkomponente, bestehend aus mindestens einem (Meth)Acryloylgruppen-aufweisenden, einwertigen Alkohol, und
C) 2-20 Gew.-Teilen einer weiteren Aufbaukomponente, bestehend aus mindestens einer (Meth)Acryloylgruppen-freien Verbindung mit gegenüber Isocyanatgruppen reaktionsfähigen Gruppen
hergestellt worden sind.

Die Herstellung der erfindungsgemäß zu verwendenden Polyurethane erfolgt durch Umsetzung der obengenannten Ausgangskomponenten A)-C), wobei Art- und Mengenverhältnisse dieser Ausgangskomponenten vorzugsweise so gewählt werden, dass isocyanatgruppenfreie Polyurethane (NCO-Gehalt < 0,2%) mit einem als Zahlenmittel bestimmten Molekulargewicht von 800 bis 100.000 resultieren.

Die Komponente A) besteht aus mindestens einem organischen Polyisocyanat. Geeignete Polyisocyanate sind beliebige, aus der Polyurethanchemie an sich bekannte, organische Polyisocyanate mit aliphatisch, cycloaliphatisch und/oder aromatisch gebundenen Isocyanatgruppen, die vorzugsweise ein Molekulargewicht von 144 bis 1000, vorzugsweise 168 bis 300 aufweisen. Geeignet sind beispielsweise Butylendiisocyanat, Hexamethylendiisocyanat (HDI), Isophorondisocyanat (IPDI), 3(4)-Isocyanatomethyl-methylcyclohexyl-isocyanat (IMCI), Trimethylhexamethylendiisocyanat (=2,2,4 und/oder 2,4,4-Trimethylhexamethylendiisocyanat), die isomeren Bis(4,4'-isocyanatocyclohexyl)methane, Isocyanatomethyl-1,8-octandiisocyanat, 1,4-Cyclohexylendiisocyanat, 1,4-Phenylendiisocyanat, 2,4- und/oder 2,6-Toluylendiisocyanat (TDI), 1,5-Naphthylendiisocyanat, 2,4'- und/oder 4,4'-Diphenylmethandiisocyanat (MDI), Triphenylmethan-4,4', 4" -triisocyanat oder deren Derivate mit Urethan-, Isocyanurat-, Allophanat-, Biuret-, Uretdion-, Iminooxadiazindionstruktur und Mischungen derselben. Diese Derivate weisen im allgemeinen ein Molekulargewicht bis ca. 1.000 auf. Die Herstellung derartiger Derivate ist beispielsweise in den US-A 3 124 605, US-A 3 183 112, US-A 3 919 218, US-A 4 324 879 oder der EP-A 798 299 beschrieben.

Bevorzugt werden als Komponente A) HDI, IPDI, MDI und/oder durch Trimerisierung von HDI oder IPDI erhaltene Isocyanatgruppen aufweisende Polyisocyanate verwendet.

Die Komponente B) besteht aus mindestens einem (Meth)Acryloylgruppen aufweisenden, einwertigen Alkohol. Hierunter sind insbesondere Hydroxyalkylester der Acrylsäure oder Methacrylsäure mit vorzugsweise 2-4 Kohlenstoffatomen im Hydroxyalkylrest wie Hydroxyethyl(meth)acrylat, 2- und 3-Hydroxypropyl(meth)-acrylat, 2-, 3- und 4-Hydroxybutyl(meth)acrylat zu verstehen. Bevorzugt wird 2-Hydroxyethylacrylat.

Die Komponente C) besteht aus mindestens einer (Meth)Acryloylgruppen-freien organischen Verbindung mit mindestens zwei gegenüber Isocyanatgruppen reaktionsfähigen Gruppen, insbesondere mindestens zwei, vorzugsweise 2-4 und besonders bevorzugt 2-3 alkoholischen Hydroxylgruppen. Die als Komponente C) bzw. als Teil der Komponente C) besonders gut geeigneten Verbindungen weisen ein Molekulargewicht von 62-200 auf. Beispielhaft genannt seien Ethylenglykol, 1,2-und 1,3-Propandiol, Neopentylglykol, Butandiol, Hexandiol, Glycerin, Trimethylolethan, Trimethylolpropan und Pentaerythrit. Ferner sind als Komponente C) bzw. als Teil der Komponente C) die aus der Polyurethanchemie an sich bekannten höher molekularen Verbindungen, mit gegenüber Isocyanatgruppen reaktionsfähigen Gruppen, wie Hydroxylgruppen, beispielsweise die bekannten Polyhydroxypolyether oder -polyester eines über 200 liegenden Molekulargewichts einsetzbar.

Es ist möglich, die Herstellung der Polyurethane durch Umsetzung der genannten Ausgangskomponenten in der Schmelze der im festem Zustand kristallinen, (Meth)-Acryloylgruppen aufweisenden Verbindungen des Schmelzpunkts 30 bis 110°C durchzuführen, wobei vorzugsweise Reaktionstemperaturen von 30 bis 120°C, insbesondere 50 bis 100°C eingehalten werden. Bei dieser Variante wird vorzugsweise so vorgegangen, dass zunächst in einem ersten Reaktionsschritt die Umsetzung zwischen der Komponente A) und der Komponente B) durchgeführt wird, worauf sich die Umsetzung der so erhaltenen Umsetzungsprodukte mit der Komponente C) anschließt.

In der Praxis kann somit beispielsweise so vorgegangen werden, dass das Polyisocyanat vorgelegt und unter milden Bedingungen, z.B. innerhalb der obengenannten Temperaturbereiche mit dem ungesättigtem Monoalkohol B) umgesetzt wird, worauf sich die Umsetzung mit der weiteren Komponente C) ebenfalls innerhalb der genannten Temperaturbereiche anschließt, bis der NCO-Gehalt auf unter 0,5, bevorzugt unter 0,2 Gew.-% abgefallen ist.

Die zum Polyurethan führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Das Umsetzungsprodukt kann andererseits durch Zugabe geeigneter Inhibitoren und Antioxidantien wie beispielsweise Phenole und/oder Hydrochinone in Mengen von jeweils 0,001 bis 0,5 Gew.-% des Gesamtansatzes vor vorzeitiger und unerwünschter Polymerisation geschützt werden. Der Zusatz dieser Hilfsmittel kann vor, gleichzeitig und/oder im Anschluß an die zum Polyurethan führende Umsetzung erfolgen.

Bevorzugt wird bei der Herstellung ein sauerstoffhaltiges Gas (z.B. Luft) durch die Reaktionsmischung geleitet.

Die durch das erfindungsgemäße Verfahren erhaltenen Polyurethane bzw. Urethanacrylate stellen wertvolle Bindemittel für Pulverlacke dar. Sie können ohne weitere Zusätze als hitze-vernetzbare Pulver-Klarlacke verarbeitet werden (in welchem Falle das Bindemittel mit dem Überzugsmittel identisch wäre) oder, vorzugsweise, mit den aus der Lacktechnologie üblichen Hilfs- und Zusatzmitteln, wie beispielsweise Pigmenten, wie z.B. Titandioxid, Verlaufsmitteln, wie z.B. Polybutylacrylat oder Siliconen und/oder anderen Zusatzstoffen versehen und z.B. auf Extrudern oder Knetern bei Temperaturen von ca. 40 bis 140, vorzugsweise 60-80°C, homogenisiert werden. Es ist allerdings auch möglich obengenannte Hilfs- und Zusatzmittel sofort nach Ende der Herstellung in die Schmelze einzurühren.

Der anfallende Feststoff wird dann in an sich bekannter Weise gemahlen und durch Sieben von groben Kornanteilen, vorzugsweise zumindest von solchen mit einer oberhalb 0,1 mm liegenden Korngröße befreit.

Die so hergestellten pulverförmigen Überzugsmittel können nach üblichen Pulverauftragsverfahren, wie z.B. elektrostatischem Pulversprühen, triboelektrischem Auftrag oder Wirbelsintern, auf die zu überziehenden Formteile aufgebracht werden. Die Überzüge werden dann zunächst durch Einwirkung von Hitze (z.B. durch IR-Strahler) geschmolzen, es bildet sich ein klarer Film, sofern keine Pigmente oder Mattierungsmittel o.ä. eingearbeitet wurden. Die für das Schmelzen und Verlaufen des Pulvers notwendige Temperatur liegt oberhalb des Schmelzbereichs des Überzugsmittels. Die Härtung der Überzüge kann entweder durch Erhitzen auf Temperatur von 130-220°C, vorzugsweise 150-190°C, und/oder durch die Einwirkung von energiereicher Strahlung wie UV- oder Elektronenstrahlung erfolgen.

Im Falle der Vernetzung mittels UV-Bestrahlung ist es notwendig, in die Überzugsmassen Fotoinitiatoren homogen einzuarbeiten.

Als Fotoinitiatoren sind die üblicherweise eingesetzten Verbindungen geeignet, wenn sie die Pulvereigenschaften wie Rieselfähigkeit und Lagerfähigkeit nicht negativ beeinflussen.

Beispiele hierfür sind 1-Hydroxycyclohexylphenylketon, Benzildimethylketal oder - bei pigmentierten Systemen - 2-Methyl-1-(4-(methylthio)phenyl-2-morpholinopropanon-1 oder Trimethyl-benzoyl-diphenyl-phosphinoxid.

Die genannten Fotoinitiatoren, die in Mengen zwischen 0,1 und 10 Gew.-%, vorzugsweise 0,1 bis 5 Gew.-%, bezogen auf das Gewicht der Polyurethane, eingesetzt werden, können als einzelne Substanz oder, wegen häufiger vorteilhafter synergistischer Effekte, auch in Kombination miteinander verwendet werden.

### Beispiele

In den nachfolgenden Beispielen beziehen sich alle Prozentangaben auf das Gewicht.

(Meth)Acryloylgruppen aufweisende Verbindungen, die im festem Zustand kristallin sind und einen Schmelzpunkt von 30 bis 110°C besitzen:
1) In einem beheizbaren 2 1-Reaktionsgefäß mit Rührer, Tropftrichter, Gaseinleitung und Innenthermometer werden 168,2 g Hexamethylendiisocyanat, 0,1 g Dibutylzinndilaurat, 0,2 g 2,5-Di-tert.-butylhydrochinon, 0,8 g 2,6-Di-tert.-butyl-4-methylphenol vorgelegt und unter Rühren und Durchleiten von Luft (3 l/h) auf 80°C erhitzt. Es werden 232,2 g 2-Hydroxyethylacrylat zudosiert, so dass die Innentemperatur nicht über 90°C steigt. Anschließend wird bei 90°C solange nachgerührt, bis der NCO-Gehalt unter 0,2 % liegt. Dann wird die heiße Schmelze in eine Aluminiumschale gegossen, wo sie erstarrt und kristallisiert. Das abgekühlte, kristallisierte Produkt wird mechanisch zerkleinert. Der Schmelzpunkt beträgt 69-70°C.
2) In einem beheizbaren 2 1-Reaktionsgefäß mit Rührer, Tropftrichter, Gaseinleitung und Innenthermometer werden 254,0 g 4,4'-Diphenylmethandiisocyanat (MDI), 0,1 g Dibutylzinndilaurat, 0,2 g 2,5-Di-tert.-butylhydrochinon, 0,8 g 2,6-Di-tert.-butyl-4-methylphenol vorgelegt und unter Rühren und Durchleiten von Luft (3 l/h) auf 80°C erhitzt. Es werden 260,1 g 2-Hydroxyethylmethacrylat zudosiert, so dass die Innentemperatur nicht über 95°C steigt. Anschließend wird bei 95°C solange nachgerührt, bis der NCO-Gehalt unter 0,2 % liegt. Dann wird die heiße Schmelze in eine Aluminiumschale gegossen, wo sie erstarrt und kristallisiert. Das abgekühlte, kristallisierte Produkt wird mechanisch zerkleinert. Der Schmelzpunkt beträgt 89-90°C.
   Herstellung eines Urethanacrylats in (Meth)Acryloylgruppen aufweisende Verbindungen, die im festem Zustand kristallin sind und einen Schmelzpunkt von 30 bis 110°C besitzen:
3) Es werden 50,00 g Bisphenol-A-dimethacrylat (Smp. 72-74°C, Fa. Aldrich), 31,25 g Isophorondiisocyanat, 0,02 g Dibutylzinndilaurat, 0,02 g 2,5-Di-tert.-butylhydrochinon, 0,10 g 2,6-Di-tert.-butyl-4-methylphenol vorgelegt und bei 80°C gelöst bzw. geschmolzen. Bei 80 bis 90°C werden zunächst 9,80 g 2-Hydroxyethylacrylat und dann 8,80 g Trimethylolpropan zudosiert. Es wird solange weitergerührt, bis der NCO-Gehalt der Reaktionsmischung unter 0,2 % liegt. Dann wird die heiße Schmelze in eine Aluminiumschale gegossen, wo sie langsam erstarrt und kristallisiert. Das abgekühlte, kristallisierte Produkt wird mechanisch zerkleinert.
4) Es werden 1255,0 g des Produkts von Beispiel 1), 781,3 g Isophorondiisocyanat, 0,6 g Dibutylzinndilaurat, 0,5 g 2,5-Di-tert.-butylhydrochinon, 2,5 g 2,6-Di-tert.-butyl-4-methylphenol vorgelegt und bei 80°C gelöst bzw. geschmolzen. Bei 80 bis 90°C werden zunächst 245,0 g 2-Hydroxyethylacrylat und dann 220,0 g Trimethylolpropan zudosiert. Es wird solange weitergerührt, bis der NCO-Gehalt der Reaktionsmischung unter 0,2 % liegt. Dann wird die heiße Schmelze in eine Aluminiumschale gegossen, wo sie langsam erstarrt und kristallisiert. Das abgekühlte, kristallisierte Produkt wird mechanisch zerkleinert.
5) Beispiel 4 wird wiederholt mit dem Unterschied, dass anstelle von 220,0 g Trimethylolpropan jetzt 642,7 g des Umsetzungsprodukts von 1,0 mol 1,4-Butandiol mit 1,5 mol ε-Caprolactam eingesetzt werden.
6) Zur Überprüfung der Pulverlackeigenschaften werden 96 Gew.-% das Bindemittels 4) mit 3 Gew.% Photoinitiator Irgacure 2959 (Fa. Ciba Spezialitätenchemie, Lampertheim) und 1 Gew.% Verlaufshilfsmittel Byk LPG 6952 (Fa. Byk Chemie, Wesel) zunächst in einem Premixer Pilot 3 (Fa. Prism) für 30 Sekunden bei 2500 U/min vorgemischt. Anschließend wird die Mischung in einem Extruder Typ MT 19 PC (Fa. APV) bei 45°C Temperatur in Zone 1 und 2 sowie 300 U/min bei ca. 60 % Auslastung weiterverarbeitet. Die extrudierte Mischung wird nach Kristallisation mechanisch grob zerkleinert und anschließend in einer Sichtermühle Typ ICM4 (Fa. Neumann und Esser) mit den Einstellungen Sichter 30 m/s und Rotor 100 m/s gemahlen. Nach Sieben zum Ausschluß von Mahlgut mit einem Durchmesser größer 90 um wird das resultierende Pulver mit einer Elektrostatic-Pistole (Fa. Wagner) bei 80 kV auf ein Eisenblech, das mit einer kathodischen Tauchlackierung vorbehandelt wurde (Fa. Bonder), versprüht. Das Blech wird 5 min im Ofen bei 100°C temperiert. Es bildet sich ein homogener, flüssiger Film. Unmittelbar im Anschluß wird das Blech heiß an einem UV-Strahler (Quecksilberhochdruckstrahler, 80 W/cm, Abstand 20 cm, Bandgeschwindigkeit 5 m/min) vorbeibewegt. Der Film ist sofort hart und wird nach Abkühlen auf Raumtemperatur und 60 min Lagerung beurteilt. Schichtdicke 80 bis 100 µm.

Die Lösemittelfestigkeit wird mittels eines in Butylacetat getränkten Wattebauschs, der mit einem Andruck von ca. 1 kg in 100 Doppelhüben über den Film bewegt wird, beurteilt. Die Kratzfestigkeit wird durch Ritzen mit dem Fingernagel überprüft.

Der Film ist lösemittel- und kratzfest .

## Patentansprüche

1. Verfahren zur Herstellung von (Meth)Acryloylgruppen aufweisenden Oligo- und Polyurethanen als Bindemittel für Pulverlacke **dadurch gekennzeichnet, dass** eine Isocyanat-haltige Komponente mit einer Hydroxylgruppen-haltigen Komponente, die mindestens einen zusätzlich (Meth)Acryloylgruppen aufweisenden Bestandteil enthält, in einer Schmelze von bestimmten (Meth)-Acryloylgruppen aufweisenden Verbindungen so lange bei erhöhter Temperatur umgesetzt wird, bis der Gehalt an NCO unter 0,5 Gew.-% abgesunken ist, wobei die (Meth)Acrylolylgruppen aufweisenden Verbindungen in festem Zustand kristallin sind, einen Schmelzpunkt von 30 bis 100°C und eine dynamische Viskosität bei 111°C von unter 10 Pa·s besitzen.

2. Verfahren nach Anspruch 1, **dadurch gekennzeichnet, dass** die Herstellung in geschmolzenen (Meth)Acryloylgruppen aufweisenden Mono-, Di- und/oder Oligourethanen durchgeführt wird, die in festem Zustand kristallin sind, einen Schmelzpunkt von 30 bis 110°C und eine dynamische Viskosität bei 111°C von unter 10 Pa·s besitzen.

3. Verwendung der nach Anspruch 1 hergestellten Bindemittel für Pulverlacke zur Beschichtung von Substraten aus Holz, Metall, Kunststoffen, mineralischen Stoffen und Substraten, die bereits beschichtet sind, oder von Substraten, die aus beliebigen Kombinationen der genannten Materialien bestehen.
